# EUROPÄISCHE PATENTSCHRIFT

(11) **EP 0 993 984 B1**
(45) Veröffentlichungstag und Bekanntmachung des Hinweises auf die Patenterteilung: **06.02.2008**
(21) Anmeldenummer: 99116196.9
(22) Anmeldetag: 24.08.1999
(51) Int. Cl.: B60N 2/28

(54) **Haltevorrichtung zur lösbaren Befestigung eines Kindersitzes an einem Fahrzeugsitz**
Retaining device for releasably fastening a chidren's seat to a vehicle seat
Dispositif de retenue pour la fixation détachable d'un siège d'enfants à un siège de véhicule

(30) Priorität: 17.10.1998 DE 19847956
(43) Veröffentlichungstag der Anmeldung: 19.04.2000
(73) Patentinhaber: Dr.Ing. h.c.F. Porsche Aktiengesellschaft, 70435 Stuttgart (DE)
(72) Erfinder: Boegge, Herbert, 75446 Wiernsheim (DE); Mäsing, Alfons, 75417 Mühlacker-Enzberg (DE)

(56) Entgegenhaltungen:
- EP-A- 0 560 184
- EP-A- 0 619 202
- EP-A- 0 693 393
- EP-A- 0 694 436
- EP-A- 0 703 113
- EP-A- 0 714 806
- DE-C- 19 723 345

## Beschreibung

Die Erfindung betrifft eine Haltevorrichtung zur lösbaren Befestigung eines Kindersitzes an einem Fahrzeugsitz gemäß dem Oberbegriff des Patentanspruchs 1.

Aus der EP 0 694 436 B1, die als nächstliegender Stand der Technik angesehen wird, ist ein Kraftfahrzeug mit mindestens einem Fahrzeugsitz bekannt, welcher Haltevorrichtungen für einen darauf befestigbaren Kindersitz aufweist, wobei zur Halterung des Kindersitzes an der Rückenlehne zwei in Querrichtung gesehen beabstandet angeordnete Halteorgane vorgesehen sind.

Jedes Halteorgan wird durch einen - in der Draufsicht gesehen - etwa u-förmigen Haltebügel gebildet, wobei die beiden seitlichen Schenkel des Haltebügels durch sitzseitige Hülsen hindurchgeführt sind. Die seitlichen Schenkel weisen an ihren freien, vorstehenden Enden jeweils Gewindeabschnitte auf, auf die von der Rückseite der Rückenlehne her Muttern aufgedreht sind. Diese Anordnung ist relativ aufwendig, da zur Festlegung jedes Halteorgans zwei Schraubbefestigungen erforderlich sind. Die vorstehenden Schraubbefestigungen an der Rückseite der Rückenlehne bergen zudem ein erhöhtes Verletzungsrisiko für dahintersitzende Insassen.

Aufgabe der Erfindung ist es, ein Halteorgan zur Festlegung eines Kindersitzes an einem Fahrzeugsitz und die dazugehörige Schraubbefestigung zu vereinfachen und verletzungssicher zu gestalten.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch die Ausbildung jedes Halteorgans als ringförmige Halteöse sowie die Montage von der Vorderseite her und die Verwendung lediglich einer Schraubbefestigung pro Halteöse eine einfache, kostengünstige Haltevorrichtung geschaffen wird. Durch die Anordnung eines erweiterten Auflageabschnitts an der Halteöse, der sich an einer am Fahrzeugsitz aufliegenden Distanzscheibe abstützt, wird eine kippsichere Auflage der Halteöse erzielt. Die erfindungsgemäße Halteöse läßt sich einfach und kostengünstig herstellen und leicht montieren bzw. demontieren. Bei demontierter Halteöse wird in die Aussparung am Fahrzeugsitz eine Abdeckkappe eingesetzt.

Als Schraubbefestigung ist beispielsweise ein an die Halteöse angeformter Gewindezapfen vorgesehen, der in eine sitzseitige Gewindeaufnahme eindrehbar ist. Die Gewindeaufnahme wird durch eine flüssigkeits- bzw. gasdichte geschlossene Limbachmutter, eine Schweißmutter oder dgl. gebildet. Bei einer weiteren Ausführungsform weist der Auflageabschnitt der Halteöse eine Durchgangsbohrung auf, durch die eine Befestigungsschraube zum Festlegen der Halteöse hindurchführbar ist. Die Befestigungsschraube stützt sich mit einem Kopfabschnitt an der Halteöse ab, wobei ein Außengewindeabschnitt der Befestigungsschraube in ein Innengewinde der Gewindeaufnahme eindrehbar ist.

Desweiteren kann am Fahrzeugsitz eine Schweißschraube befestigt sein, deren Gewindeschaft durch die Distanzscheibe und den Auflageabschnitt der Halteöse hindurchragt, wobei auf den vorstehenden Gewindeabschnitt eine Mutter aufgedreht ist.

Durch den Winkelversatz zwischen der Mittelachse der Schraubbefestigung und der Mittelachse der ringförmigen Halteöse wird erreicht, daß die Halteöse in zwei unterschiedlichen Stellungen montierbar ist. Ein und dieselbe Halteöse ist deshalb für verschiedene Fahrzeugtypen einsetzbar (z.B. Cabrioversion und Coupeversion eines Fahrzeuges mit unterschiedlichen Lagen der Befestigungspunkte für den Kindersitz).

Ein Ausführungsbeispiel der Erfindung ist in den Zeichnungen dargestellt und wird im folgenden näher beschrieben.

Es zeigen
- Fig. 1: eine Seitenansicht auf einem Fahrzeugsitz mit einem aufgesetzten Kindersitz, teilweise im Schnitt, einer Cabrio-Version eines Fahrzeuges,

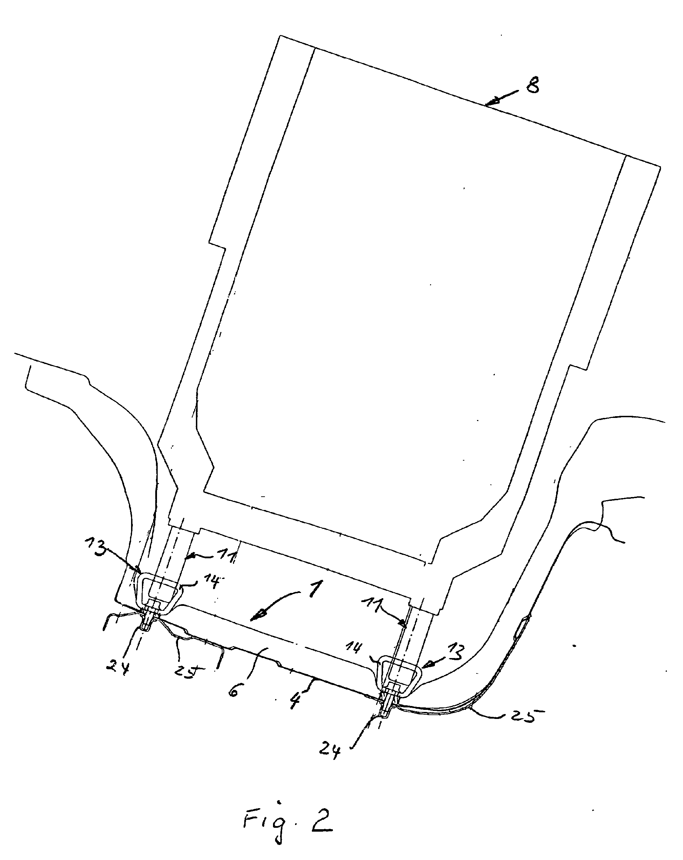

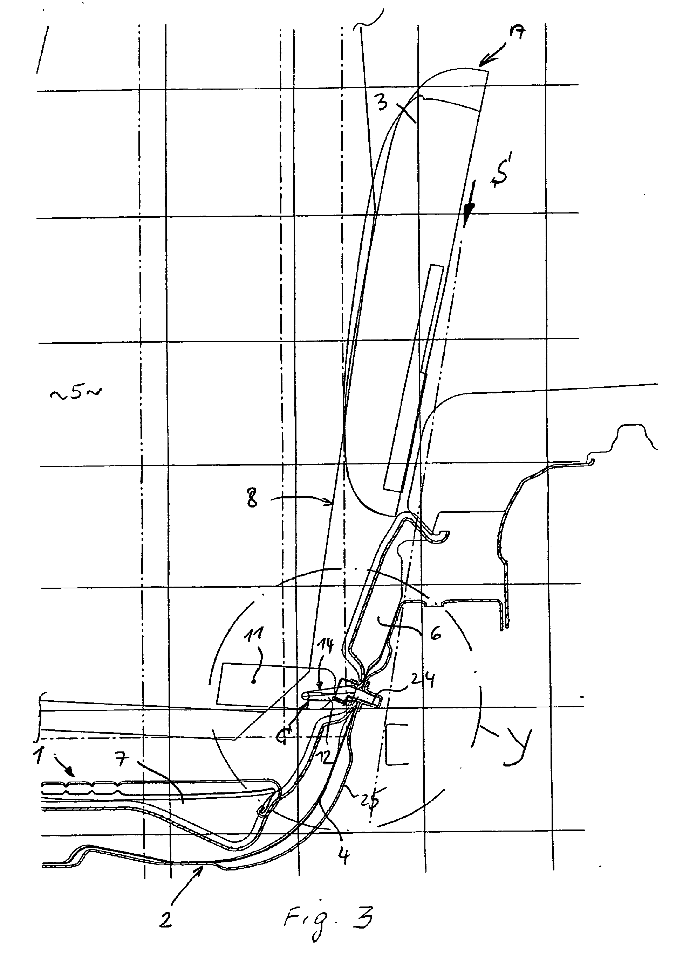

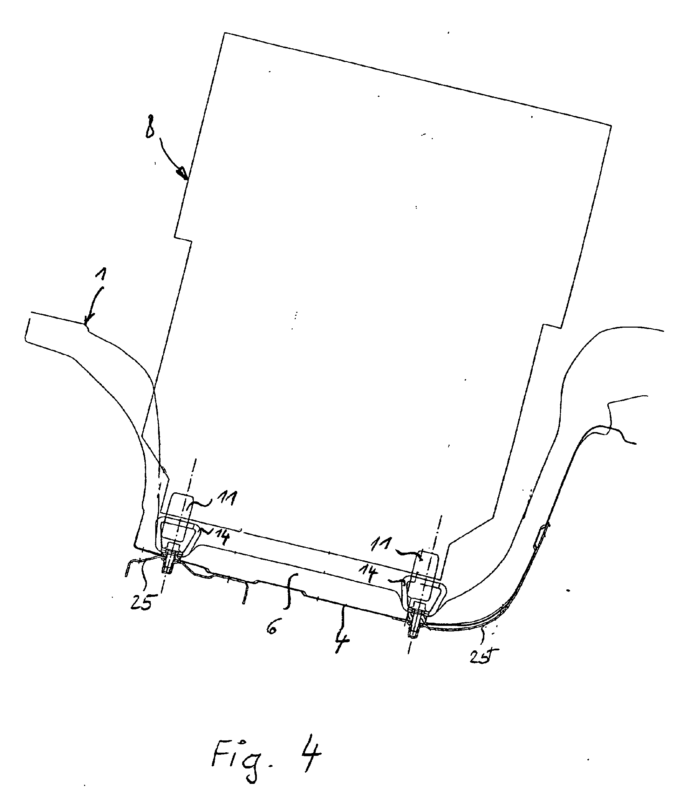

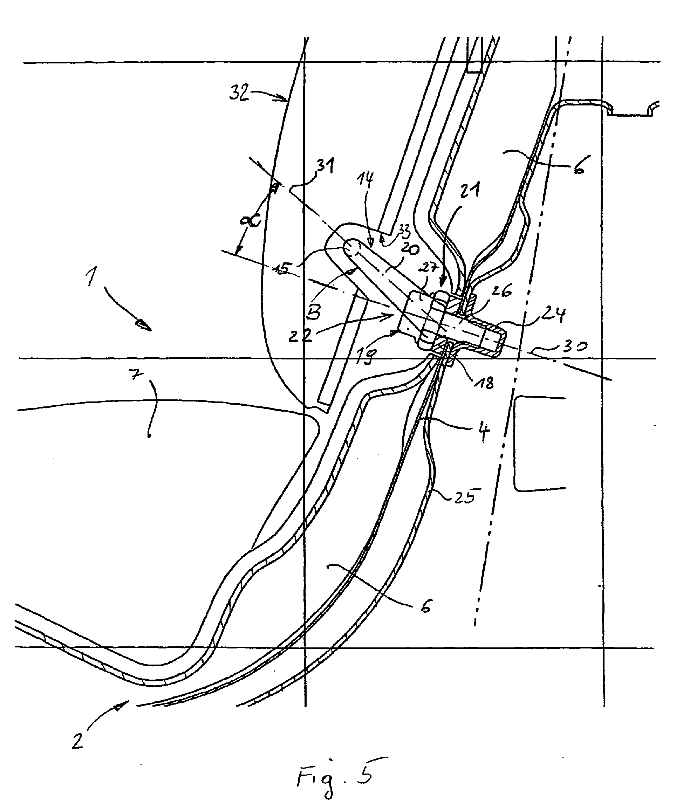

- Fig. 2: eine Ansicht in Pfeilrichtung R der Fig. 1,

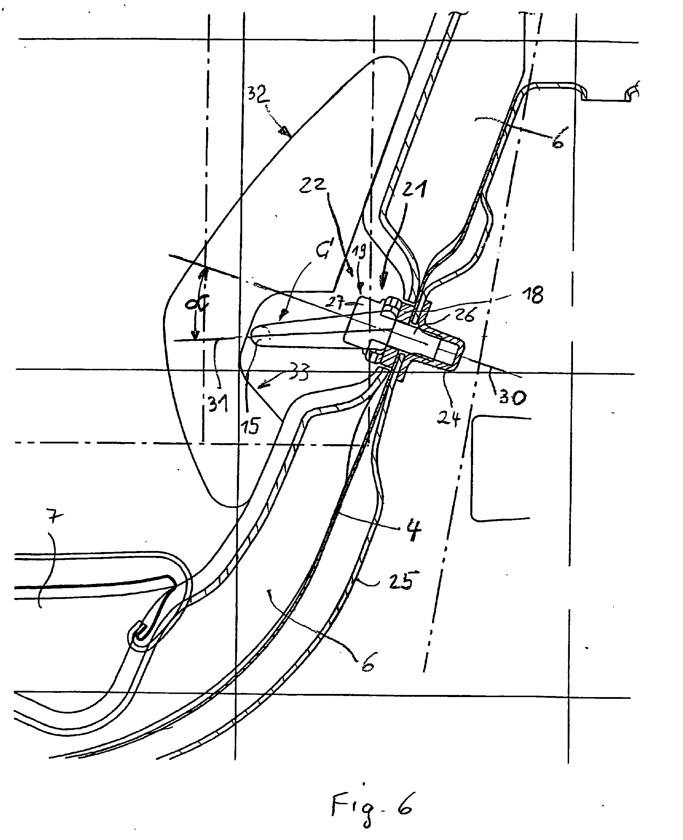

- Fig. 3: eine Seitenansicht entsprechend Fig. 1 einer Coupe-Version eines Fahrzeuges,
- Fig. 4: eine Ansicht in Pfeilrichtung S der Figur 3,

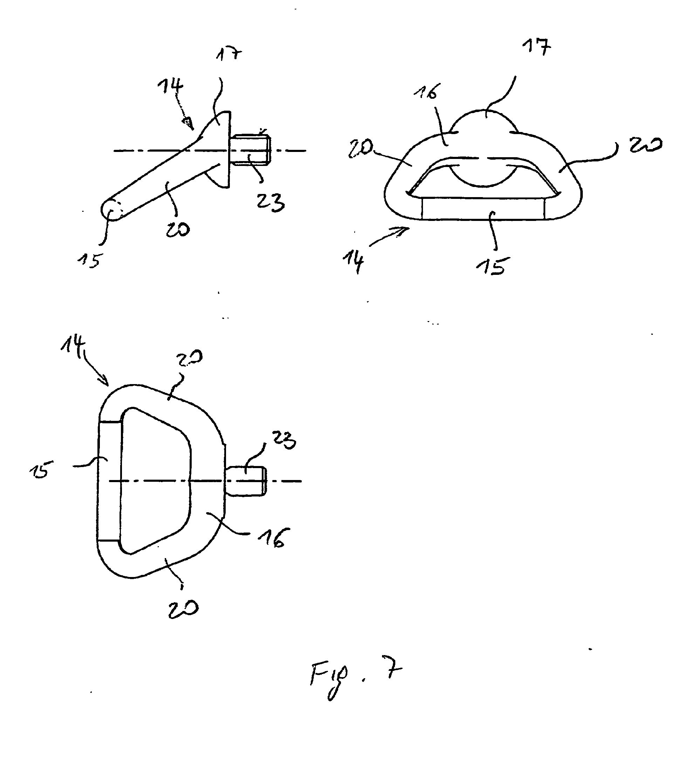

- Fig. 5: einen Ausschnitt X der Fig. 1 in größerem Maßstab ohne aufgesetzten Kindersitz,
- Fig. 6: einen Ausschnitt Y der Fig. 3 in größerem Maßstab ohne aufgesetzten Kindersitz,
- Fig. 7: eine erste Ausführungsform der Halteöse mit angeformtem Gewindezapfen in drei verschiedenen Ansichten,

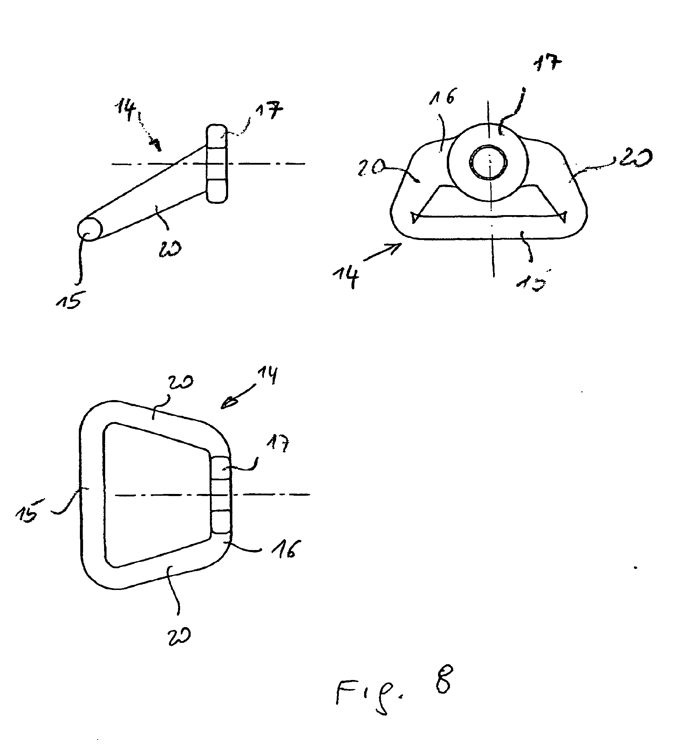

- Fig. 8: eine zweite Ausführungsform der Halteöse mit einer Öffnung im Bereich des Auflageabschnitts zum Hindurchführen einer Befestigungsschraube in drei verschiedenen Ansichten,

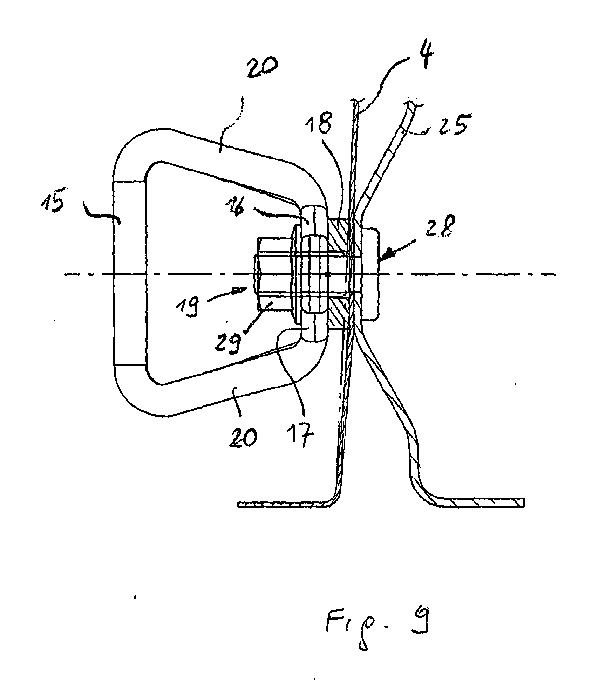

- Fig. 9: einen Schnitt durch eine dritte Ausführungsform der Schraubbefestigung mit einer am Fahrzeugsitz angebrachten Schweißschraube.

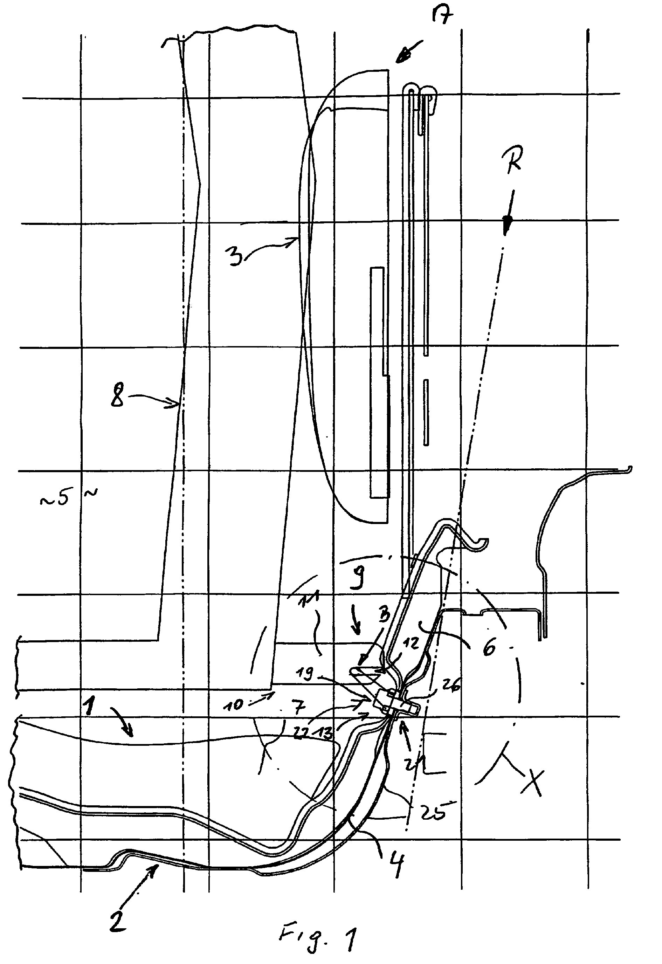

In Fig. 1 ist ein Teilbereich eines Fahrzeugsitzes 1 dargestellt, der sich aus einem Sitzteil 2 und einer Rückenlehne 3 zusammensetzt. Dabei kann es sich um einen Vordersitz- oder aber auch um einen Rücksitz eines Fahrzeuges handeln.

Im Ausführungsbeispiel wird der Fahrzeugsitz 1 durch eine aus zwei nebeneinanderliegend angeordneten Sitzen bestehende Hintersitzanlage gebildet, wobei jedes Sitzteil 2 eine aufbauseitig feststehende Sitzmulde 4 umfaßt, die zum Fahrgastraum 5 hin einen hinterschäumten Teppich 6 und ein aufgesetztes Sitzkissen 7 aufweist. Oberhalb der Sitzmulde 2 ist eine schwenkbar gelagerte Rückenlehne 3 vorgesehen, die um eine horizontal ausgerichtete, querverlaufende Drehachse von einer aufrechten Betriebsstellung A nach vorne unten in eine nicht näher dargestellte Ablagestellung abklappbar ist.

Auf den Fahrzeugsitz 1 ist ein Kindersitz 8 aufsetzbar, wobei der Kindersitz 8 über zumindest eine Haltevorrichtung 9 lösbar mit dem Fahrzeugsitz 1 verbindbar ist. Der Kindersitz 8 ist in herkömmlicher Weise als einteiliger Schalensitz ausgebildet und weist einen nicht näher dargestellten vorderen Fangtisch auf, der mittels eines Beckengurtes am Kindersitz 8 festlegbar ist.

Der Kindersitz 8 weist in einem hinteren untenliegenden Bereich 10 zwei - in Fahrzeugquerrichtung gesehen - beabstandet angeordnete, vorstehende Befestigungslaschen 11 auf, wobei am freien Ende jeder längsgerichteten Befestigungslasche 11 eine Einführöffnung 12 und eine nicht gezeigte schwenkbare Sperrklinke angeordnet sind.

Bei montiertem Kindersitz 8 umgreift jede Sperrklinke abschnittsweise ein am Fahrzeugsitz befestigtes Halteorgan 13. Die Sperrklinke läßt sich mittels einer Einrichtung von einer Verriegelungsstellung in eine Freigabestellung verlagern, in der der Kindersitz 8 vom Fahrzeugsitz 1 abnehmbar ist.

Erfindungsgemäß wird jedes Halteorgan 13 durch eine ringförmige Halteöse 14 gebildet. Die Halteöse 14 weist einen vorstehenden, querverlaufenden etwa horizontal ausgerichteten Halteschenkel 15 auf, der im Querschnitt gesehen kreisförmig profiliert ist und einen Durchmesser von 6 mm aufweist. Der querverlaufende stabförmige Halteschenkel 15 weist eine Quererstreckung von mindestens 25 mm auf.

Ferner umfaßt die ringförmige Halteöse 14 einen kürzeren, etwa parallel zum Halteschenkel 15 verlaufenden Befestigungsschenkel 16, der in einem mittleren Bereich seiner Quererstreckung einen sich erweiternden Auflageabschnitt 17 aufweist.

Der Auflageabschnitt 17 stützt sich an einer am Fahrzeugsitz 1 aufliegenden kreisringförmigen Distanzscheibe 18 ab. Jede ringförmige Halteöse 14 ist von der Vorderseite des Fahrzeugsitzes 1 her über lediglich eine Schraubbefestigung 19 am Fahrzeugsitz 1 festlegbar.

Seitliche schrägverlaufende Verbindungsabschnitte 20 verbinden den vorgelagerten Halteschenkel 15 beiderseits mit dem Befestigungsschenkel 16 der Halteöse 14. Die Verbindungsabschnitte 20 der Halteöse 14 weisen einen elliptischen Querschnitt auf, wobei sich die Höhe der Verbindungsabschnitte 20 in Richtung Befestigungsschenkel 16 hin vergrößert. Die vorzugsweise durch ein Schmiedeteil oder ein Gußteil gebildete Halteöse 14 weist in der Draufsicht gesehen etwa eine trapezförmige Kontur auf, wobei die Übergangsbereiche vom Halteschenkel 15 und dem Befestigungsschenkel 16 zu den schräg verlaufenden Verbindungsabschnitten 20 gerundet ausgebildet sind.

Der Auflageabschnitt 17 des Befestigungsschenkels 16 weist im Ausführungsbeispiel eine zylindrische Außenform auf, wobei der Außendurchmesser des Auflageabschnittes 17 annähernd dem Außendurchmesser der Distanzscheibe 18 entspricht.

Die Befestigungspunkte 21 für die Halteösen 14 sind in einem hinteren nach oben ragenden Abschnitt der aufbauseitigen Sitzmulde 4 vorgesehen und zwar etwas oberhalb der eingesetzten Sitzkissen 7.

Im Bereich der Halteösen 14 ist der hinterschäumte Teppich 6 jeweils mit einer örtlichen Aussparung 22 versehen.

Bei nicht montierten Halteösen 14 sind in diese Aussparungen 22 nicht näher dargestellte Abdeckkappen einsetzbar. Dies kann durch Einklipsen oder dergleichen erfolgen.

Gemäß einem ersten Ausführungsbeispiel umfaßt die Schraubbefestigung 19 einen an die Anlagefläche des Befestigungsschenkels 16 angeformten vorstehenden Gewindezapfen 23, wobei das Außengewinde des Gewindezapfens 23 in eine feststehende Gewindeaufnahme 24 des Fahrzeugsitzes 1 eindrehbar ist.

Die Gewindeaufnahme 24 weist ein Innengewinde auf und wird durch eine geschlossene Limbachmutter 25, eine Schweißmutter oder dergleichen gebildet.

Die Gewindeaufnahme 24 ist an einer außenliegenden Verstärkung 25 der Sitzmulde 4 durch Schweißen oder dergleichen befestigt.

Die Verstärkung 25 wird durch ein eingesetztes, profiliertes Knotenblech oder durch eine Gurtschloßverstärkung gebildet.

Gemäß einer zweiten Ausführungsform umfaßt die Schraubbefestigung 19 eine Befestigungsschraube 26, die sich mit einem Kopfabschnitt 27 an der der Distanzscheibe 18 abgekehrten Seite des Auflageabschnitts 17 abstützt, wobei ein Gewindeabschnitt der Befestigungsschraube 26 durch Öffnungen des Auflageabschnitts 17, der Distanzscheibe 18 und der Sitzmulde 4 hindurchgeführt ist und mit dem freien Ende in die feststehende Gewindeaufnahme 24 des Fahrzeugsitzes 1 eingedreht ist.

Gemäß einer dritten Ausführungsform umfaßt die Schraubbefestigung 19 eine am Fahrzeugsitz 1 befestigte Schweißschraube, deren Gewindeabschnitt durch Öffnungen der Sitzmulde 4, der Distanzscheibe 18 und des Auflageabschnitts 17 hindurchgeführt ist, wobei auf den vorstehenden Gewindeabschnitt eine Mutter 29 aufgedreht ist, die sich am Auflageabschnitt 17 der Halteöse 14 abstützt.

Die Halteöse 14 kann so ausgebildet sein, daß - in der Seitenansicht gesehen - die Mittelachse 30 der Schraubbefestigung 19 mit der Mittelachse 31 der ringförmigen Halteöse zusammenfällt (nicht näher dargestellt).

In den dargestellten Ausführungsbeispielen ist jedoch - in der Seitenansicht gesehen - die Mittelachse 31 der Halteöse 14 zur Mittelachse 30 der Schraubbefestigung 19 unter einem Winkel α angestellt, so daß die Halteöse 14 in zwei unterschiedlichen Betriebsstellungen montierbar ist. In einer ersten Betriebsstellung B - in der die Mittelachse 31 der Halteöse 14 schräg nach vorne oben gerichtet ist - wird die Halteöse 14 für die Cabrio-Version der Fahrzeugfamilie eingebaut, wogegen die Halteöse 14 in einer zweiten Betriebsstellung C - in der die Mittelachse 31 der Halteöse 14 schräg nach vorne unten gerichtet ist - für die Coupe-Version der Fahrzeugfamilie vorgesehen ist.

Bei montierten Halteösen 14 und nicht aufgesetztem Kindersitz 8 am Fahrzeugsitz 1 wird am Fahrzeugsitz 1 ein zusätzliches Verkleidungsteil 32 montiert, das die Halteösen 14 abdeckt. Das Verkleidungsteil 32 ist örtlich mit einer Aussparung 33 versehen.

## Patentansprüche

1. Haltevorrichtung zur lösbaren Befestigung eines Kindersitzes an einem Fahrzeugsitz, wobei am Fahrzeugsitz wenigstens ein Halteorgan mittels Schraubbefestigung in Lage gehalten ist und das Halteorgan einen vorstehenden querverlaufenden, etwa horizontal ausgerichteten Halteschenkel aufweist, an dem der Kindersitz festlegbar ist, **dadurch gekennzeichnet, daß** jedes Halteorgan (13) durch eine ringförmige Halteöse (14) gebildet wird, wobei ein etwa parallel zum Halteschenkel (15) ausgerichteter Befestigungsschenkel (16) der Halteöse (14) von der Vorderseite des Fahrzeugsitzes (1) her durch lediglich eine Schraubbefestigung (19) am Fahrzeugsitz (1) festlegbar ist.

2. Haltevorrichtung nach Anspruch 1, **dadurch gekennzeichnet, daß** die Halteöse (14) - in der Draufsicht gesehen - eine etwa trapezförmige Kontur aufweist, wobei der stabförmige Halteschenkel (15) eine größere Quererstreckung aufweist als der Befestigungsschenkel (16).

3. Haltevorrichtung nach Anspruch 1, **dadurch gekennzeichnet, daß** in einem mittleren Bereich der Quererstreckung des Befestigungsschenkels (16) ein gegenüber dem Befestigungsschenkel (16) vergrößerter Auflageabschnitt (17) ausgebildet ist, der sich an einer am Fahrzeugsitz (1) aufliegenden Distanzscheibe (18) abstützt.

4. Haltevorrichtung nach Anspruch 3, **dadurch gekennzeichnet, daß** der Auflageabschnitt (17) eine zylindrische Außenform aufweist.

5. Haltevorrichtung nach den Ansprüchen 1, 3 und 4, **dadurch gekennzeichnet, daß** die Schraubbefestigung (19) einen an den Auflageabschnitt (17) angeformten vorstehenden Gewindezapfen (23) umfaßt, der in eine am Fahrzeugsitz (1) angebrachte Gewindeaufnahme (24) eindrehbar ist.

6. Haltevorrichtung nach den Ansprüchen 1, 3 und 4, **dadurch gekennzeichnet, daß** die Schraubbefestigung (19) eine Befestigungsschraube (26) umfaßt, die sich mit einem Kopfabschnitt (27) an der der Distanzscheibe (18) abgekehrten Seite des Auflageabschnitts (17) abstützt, wobei ein Gewindeabschnitt der Befestigungsschraube (26) durch Öffnungen des Auflageabschnitts (17), der Distanzscheibe (18) und der Sitzmulde (4) hindurchgeführt und mit dem freien Ende in die feststehende Gewindeaufnahme (24) des Fahrzeugsitzes (1) eingedreht ist.

7. Haltevorrichtung nach den Ansprüchen 5 oder 6, **dadurch gekennzeichnet, daß** die am Fahrzeugsitz (1) befestigte Gewindeaufnahme (24) durch eine geschlossene Limbachmutter eine Schweißmuttter oder dergleichen gebildet wird.

8. Haltevorrichtung nach einem oder mehreren der vorangegangenen Ansprüche, **dadurch gekennzeichnet, daß** die Schraubbefestigung (19) eine am Fahrzeugsitz (1) befestigte Schweißschraube (28) umfaßt, deren Gewindeabschnitt durch die Sitzmulde (4), die Distanzscheibe (18) und den Auflageabschnitt (17) der Halteöse (14) hindurchgeführt ist, wobei auf den vorstehenden Gewindeabschnitt eine Mutter (29) aufgedreht ist.

9. Haltevorrichtung nach einem oder mehreren der vorangegangenen Ansprüche, **dadurch gekennzeichnet, daß** - in der Seitenansicht gesehen - die den Halteschenkel (15) mit dem Befestigungsschenkel (16) verbindende Mittelachse (31) der Halteöse (14) unter einem Winkel α gegenüber der Mittelachse (30) der Schraubbefestigung (19) angestellt ist, wodurch die Halteöse (14) in zwei unterschiedlichen Betriebsstellungen B, C montierbar ist.

## Claims

1. Retaining device for releasably fastening a children's seat to a vehicle seat, at least one retaining member being held in position on the vehicle seat by means of a screw fastening, and the retaining member having a projecting retaining limb which runs transversely, is oriented approximately horizontally and on which the children's seat can be secured, **characterized in that** each retaining member (13) is formed by an annular retaining eye (14), it being possible for a fastening limb (16) of the retaining eye (14), which fastening limb is oriented approximately parallel to the retaining limb (15), to be secured on the vehicle seat (1) from the front side of the vehicle seat (1) by just one screw fastening (19).

2. Retaining device according to Claim 1, **characterized in that** the retaining eye (14) has an approximately trapezoidal contour - as seen in plan view, the bar-shaped retaining limb (15) having a transverse length greater than the fastening limb (16).

3. Retaining device according to Claim 1, **characterized in that** a supporting section (17) which is larger than the fastening limb (16) is formed in a central region of the transverse length of the fastening limb (16) and is supported on a spacer washer (18) resting on the vehicle seat (1).

4. Retaining device according to Claim 3, **characterized in that** the supporting section (17) has a cylindrical outer shape.

5. Retaining device according to Claims 1, 3 and 4, **characterized in that** the screw fastening (19) comprises a projecting threaded pin (23) which is integrally formed on the supporting section (17) and can be screwed into a threaded receptacle (24) provided on the vehicle seat (1).

6. Retaining device according to Claims 1, 3 and 4, **characterized in that** the screw fastening (19) comprises a fastening screw (26) which is supported with a head section (27) on that side of the supporting section (17) which faces away from the spacer washer (18), with a threaded section of the fastening screw (26) being guided through openings in the supporting section (17), the spacer washer (18) and the seat trough (4) and being screwed by the free end into the fixed threaded receptacle (24) of the vehicle seat (1).

7. Retaining device according to Claim 5 or 6, **characterized in that** the threaded receptacle (24) which is fastened to the vehicle seat (1) is formed by a closed Limbach nut, a weld nut or the like.

8. Retaining device according to one or more of the preceding claims, **characterized in that** the screw fastening (19) comprises a weld screw (28) which is fastened to the vehicle seat (1) and the threaded section of which is guided through the seat trough (4), the spacer washer (18) and the supporting section (17) of the retaining eye (14), with a nut (29) being screwed onto the projecting threaded section.

9. Retaining device according to one or more of the preceding claims, **characterized in that** the central axis (31) of the retaining eye (14), which central axis connects the retaining limb (15) to the fastening limb (16), is positioned - as seen in side view - at an angle α in relation to the central axis (30) of the screw fastening (19), as a result of which the retaining eye (14) can be fitted in two different operating positions B, C.

## Revendications

1. Dispositif de retenue pour la fixation détachable d'un siège d'enfants à un siège de véhicule, sachant qu'au moins un organe de retenue est maintenu en position sur le siège de véhicule au moyen d'une fixation vissée et que l'organe de retenue présente une branche de retenue en saillie s'étendant transversalement, orientée environ horizontalement, à laquelle peut être fixé le siège d'enfants, **caractérisé en ce que** chaque organe de retenue (13) est formé par un oeillet de retenue annulaire (14), sachant qu'une branche de fixation (16) de l'oeillet de retenue (14), orientée environ parallèlement à la branche de retenue (15), peut être fixée depuis le côté avant du siège de véhicule (1) sur le siège de véhicule (1) par une seule fixation vissée (19).

2. Dispositif de retenue selon la revendication 1, **caractérisé en ce que** l'oeillet de retenue (14) présente - considéré en vue de dessus - un contour approximativement trapézoïdal, sachant que la branche de retenue (15) en forme de barre présente une plus grande étendue transversale que la branche de fixation (16).

3. Dispositif de retenue selon la revendication 1, **caractérisé en ce qu'**une partie de support (17) agrandie par rapport à la branche de fixation (16) est formée dans une région médiane de l'étendue transversale de la branche de fixation (16), partie qui s'appuie sur une rondelle d'écartement (18) reposant sur le siège de véhicule (1).

4. Dispositif de retenue selon la revendication 3, **caractérisé en ce que** la partie de support (17) présente une forme extérieure cylindrique.

5. Dispositif de retenue selon les revendications 1, 3 et 4, **caractérisé en ce que** la fixation vissée (19) comprend un axe fileté (23) en saillie formé sur la partie de support (17), qui peut être vissé dans un logement fileté (24) installé sur le siège de véhicule (1).

6. Dispositif de retenue selon les revendications 1, 3 et 4, **caractérisé en ce que** la fixation vissée (19) comprend une vis de fixation (26) qui s'appuie par une partie de tête (27) sur le côté de la partie de support (17) qui est opposé à la rondelle d'écartement (18), sachant qu'une partie filetée de la vis de fixation (26) est passée à travers des ouvertures de la partie de support (17), de la rondelle d'écartement (18) et de la cuvette de siège (4), et est vissée par l'extrémité libre dans le logement fileté fixe (24) du siège de véhicule (1).

7. Dispositif de retenue selon la revendication 5 ou 6, **caractérisé en ce que** le logement fileté (24) fixé sur le siège de véhicule (1) est formé par un écrou Limbach fermé, un écrou à souder ou analogue.

8. Dispositif de retenue selon une ou plusieurs des revendications précédentes, **caractérisé en ce que** la fixation vissée (19) comprend une vis à souder (28) fixée sur le siège de véhicule (1) et dont la partie filetée est passée à travers la cuvette de siège (4), la rondelle d'écartement (18) et la partie de support (17) de l'oeillet de retenue (14), un écrou (29) étant vissé sur la partie filetée dépassante.

9. Dispositif de retenue selon une ou plusieurs des revendications précédentes, **caractérisé en ce que** - considéré en vue de côté - l'axe médian (31), reliant la branche de retenue (15) à la branche de fixation (16), de l'oeillet de retenue (14) est incliné sous un angle α par rapport à l'axe médian (30) de la fixation vissée (19), de sorte que l'oeillet de retenue (14) peut être monté dans deux positions de service différentes B, C.
